# EUROPÄISCHE PATENTSCHRIFT

(11) **EP 1 803 873 B1**
(45) Veröffentlichungstag und Bekanntmachung des Hinweises auf die Patenterteilung: **08.10.2008**
(21) Anmeldenummer: 06020350.2
(22) Anmeldetag: 28.09.2006
(51) Int. Cl.: E04H 3/28, B60P 3/025

(54) **Bewegliche Bühne**
Moveable stage
Plateforme mobile

(30) Priorität: 28.12.2005 DE 202005020324 U
(43) Veröffentlichungstag der Anmeldung: 04.07.2007
(73) Patentinhaber: Eckart, Jürgen, 34369 Hofgeismar-Hümme (DE)
(72) Erfinder: Eckart, Jürgen, 34369 Hofgeismar-Hümme (DE)
(74) Vertreter: Walther, Walther & Hinz GbR

(56) Entgegenhaltungen:
- EP-A- 0 742 119
- WO-A-20/05070721
- WO-A-20/05124065
- DE-A1- 2 420 504
- DE-U1- 29 705 139
- FR-A- 2 810 356
- GB-A- 2 085 941
- GB-A- 2 328 908

## Beschreibung

Die vorliegende Erfindung betrifft eine bewegliche Bühne, umfassend ein Fahrgestell mit einer Bühnenplattform und einer auf dem Fahrgestell angeordneten Dachkonstruktion, wobei die Dachkonstruktion zu beiden Seiten auf einer Stützvorrichtung lagert, die in der Höhe verstellbar ist, wobei die Dachkonstruktion mehrere parallel zueinander verlaufende Traversen aufweist, wobei zumindest die äußeren Traversen seitlich verschieblich von den Stützvorrichtungen aufnehmbar sind, wobei die Stützvorrichtung jeweils zwei teleskopierbare Säulen umfasst, die beabstandet zueinander an dem Fahrgestell befestigt sind, wobei die Säule einen teleskopierbaren Stempel aufweist.

Bewegliche oder auch mobile Bühnen sind aus dem Stand der Technik hinreichend bekannt. Die bekannten mobilen Bühnen unterscheiden sich u. a. in ihrer Größe und in ihrem Aussehen und darüber hinaus auch in der Art des Dachaufbaues. So sind insbesondere Bühnen mit einem Pultdach, aber auch Bühnen mit einer kreisbogenförmigen Dachkonstruktion bekannt. Allen diesen Bühnen ist gemein, dass diese als Anhänger ausgebildet sind, wobei insbesondere die Vorgaben der Straßenverkehrsordnung hinsichtlich der Abmessungen eines solchen Fahrzeuges und deren Gewicht im Hinblick darauf einzuhalten sind, dass eine solche mobile Bühne noch mit einem PKW oder Geländewagen zu ziehen ist, um nicht an Sonn- oder Feiertagsfahrverbote gebunden zu sein.

Bei einer bekannten beweglichen Bühne ist die Dachkonstruktion nun derart ausgestaltet, dass, um insbesondere die maximal zulässige Breite des Fahrzeuges nicht zu überschreiten, parallel zur Längsachse der Bühne zu beiden Seiten die Dach- und die Bodenelemente der Bühnenplattform klappbar ausgebildet sind. Das heißt, dass die Dachelemente von unten nach oben ausgeklappt werden. Dies ist mit einem nicht unerheblichen Kraftaufwand verbunden, wenn man bedenkt, dass derartige Deckenelemente eine Breite von etwa 2 m und eine Länge von ungefähr 10 m aufweisen.

Aus der EP 0 742 119 A1 ist in diesem Zusammenhang eine fahrbare Bühne bekannt, die zu beiden Seiten ein Stützenpaar aufweist, wobei die Stützen eines jeden Stützenpaares zusammen teleskopierbar sind.

Die WO 2005/070712 A1 beschreibt einen Hänger, der als Ausgabe für Nahrungsmittel, z. B. Getränke, dienen soll. Hierbei ist ein Dach vorgesehen, das seitlich verschieblich ist, und das in der Höhe verfahrbar ist.

Der Erfindung liegt daher die Aufgabe zu Grunde, eine Bühne der eingangs genannten Art derart weiterzubilden, dass der Aufbau der Bühne einach und sicher auch von ungeschultem Personal erfolgen kann.

Die Aufgabe wird erfindungsgemäße dadurch gelöst, dass die Stempel beider Stützvorrichtungen durch einen Seilzug verbunden sind, wobei der Seilzug mit einem Kolbenzylinderantrieb in Verbindung steht.

Derartige teleskopierbare Säulen zum Anheben der Dachkonstruktion eröffnen die Möglichkeit des einfachen zeit- und auch kraftsparenden Aufbaues, insbesondere wenn derartige teleskopierbare Säulen hydraulisch gestützt arbeiten.

Durch den Kolbenzylinderantrieb, der durch eine elektrische Pumpe antreibbar ist, wird der Seilzug angezogen, wobei durch die Verbindung der vier Stempel der vier Säulen mit einem Seilzug sichergestellt ist, dass sämtliche Stempel in gleicher Weise ausgefahren werden. Der Seilzug ist hierbei jeweils mit dem unteren Ende eines jeden Stempels verbunden, so dass bei Betätigung des Kolbenzylinderantriebes - wie bereits ausgeführt - alle Stempel gleichzeitig ausfahren.

Weitere vorteilhafte Merkmale sind den Unteransprüchen zu entnehmen.

So ist insbesondere vorgesehen, dass die Stützvorrichtung zur Aufnahme der beiden äußeren Traversen der Dachkonstruktion zwei in entgegengesetzte Richtungen teleskopierbare Arme aufweist; d. h., dass die Arme quer zur Längsachse des Fahrzeuges, also quer zur Längsachse der Bühne, teleskopierbar ausgebildet sind, wobei nach Ausfahren der Arme der Boden der Bühne vollständig von der Dachkonstruktion überdeckt ist. Im Einzelnen ist in diesem Zusammenhang vorgesehen, dass die Arme selbst durch eine Aufnahme längs verschieblich gehalten sind, wobei die Aufnahme von der Stützvorrichtung getragen wird. Hieraus wird deutlich, dass zunächst die Arme aus der Aufnahme herausfahrbar sind, um nach Erreichen der Endstellung durch die Teleskopierbarkeit der Arme als solche weiter ausgefahren zu werden. Das bedeutet auch, dass die Aufnahme die beiden Arme in entgegengesetzter Richtung verschieblich aufnimmt.

Nach einem weiteren Merkmal der Erfindung ist vorgesehen, dass die Traversen des Daches bogenförmig ausgebildet sind, um der Bühnenkonstruktion insbesondere im Mittelbereich eine erhöhte Raumhöhe zu verschaffen, wobei sich herausgestellt hat, dass eine derartige "Rundbühne" einen gelungenen optischen Eindruck vermittelt.

Wie bereits an anderer Stelle erläutert, darf eine derartige mobile Bühne eine Breite von 2,55 m nicht überschreiten. Insofern ist in Bezug auf den Boden vorgesehen, dass der Boden der Bühne zu beiden Längsseiten abklappbare Bodenelemente aufweist, wobei die Fläche des Bodens in etwa der der Dachkonstruktion entspricht.

Anhand der Zeichnungen wird die Erfindung nachstehend beispielhaft näher erläutert.

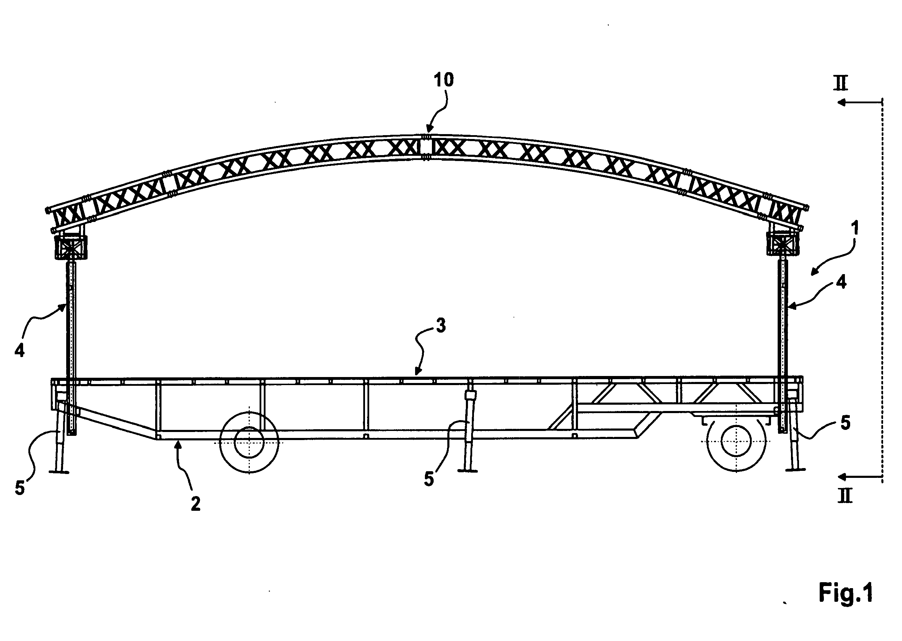

- Figur 1: zeigt die bewegliche Bühne in einer Seitenansicht;
- Figur 2: zeigt eine Ansicht gemäß der Linie II - II aus Figur 1;
- Figur 3: zeigt eine Darstellung gemäß Figur 1, wobei die Bühne im benutzbaren Zustand dargestellt ist;
- Figur 4: zeigt eine Seitenansicht gemäß der Linie IV - IV aus Figur 3;
- Figur 5: zeigt eine Ansicht gemäß der Linie V - V aus Figur 3;
- Figur 6: zeigt die Einzelheit X aus Figur 3 in vergrößerter Darstellung;
- Figur 7: zeigt die Einzelheit Y aus Figur 4 in vergrößerter, schematischer Darstellung.

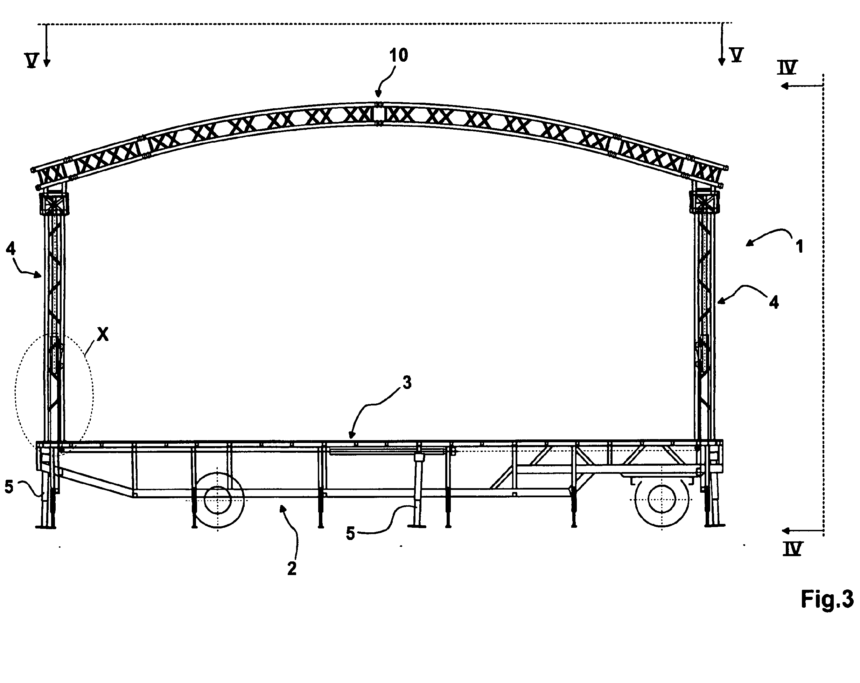

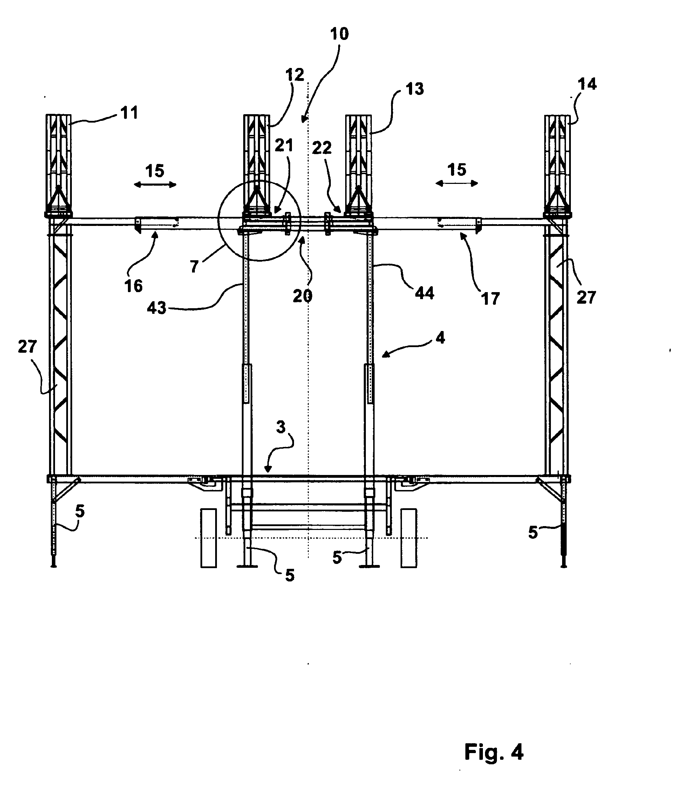

Die insgesamt mit 1 bezeichnete Bühne umfasst das Fahrgestell 2 mit dem Boden oder der Bühnenplattform 3 sowie den seitlich angeordneten Stützvorrichtungen 4, auf denen die mit 10 bezeichnete Dachkonstruktion lagert. Die Stützvorrichtung 4 ist am Fahrgestell 2 befestigt. Der insgesamt mit 3 bezeichnete Boden umfasst drei Teile, nämlich ein Mittelteil 3a und zwei abklappbare Seitenteile 3b und 3c. Die Darstellung mit ausgeklapptem Boden ergibt sich aus Figur 3 bzw. Figur 4, worauf späterhin noch eingegangen wird. Um zu verhindern, dass die mobile Bühne bzw. das Fahrgestell bei Belastung wackelt, besitzt das Fahrgestell teleskopierbare Stützen 5.

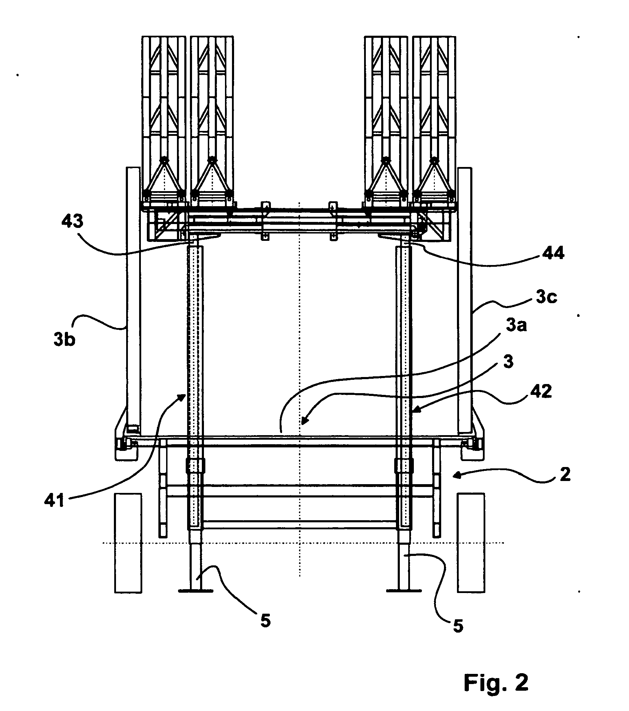

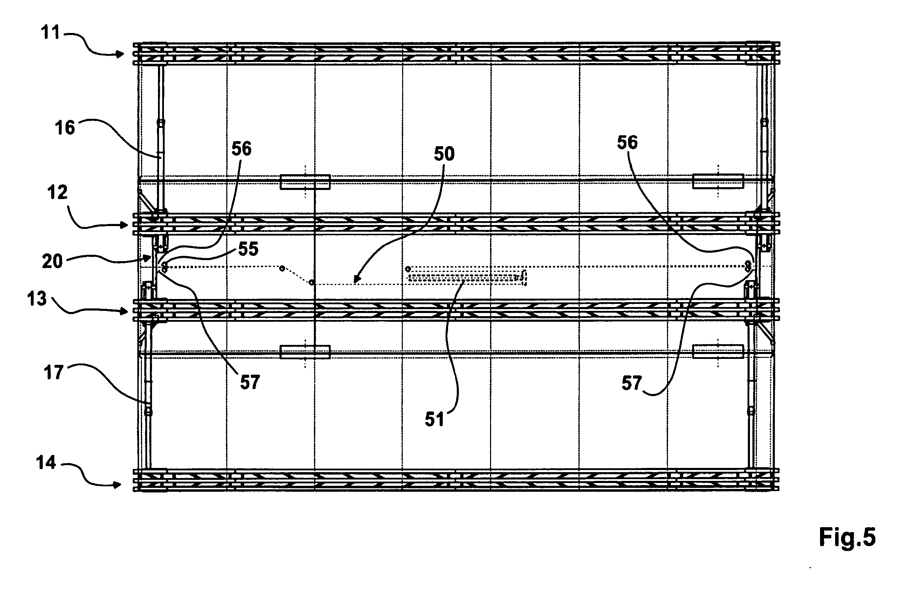

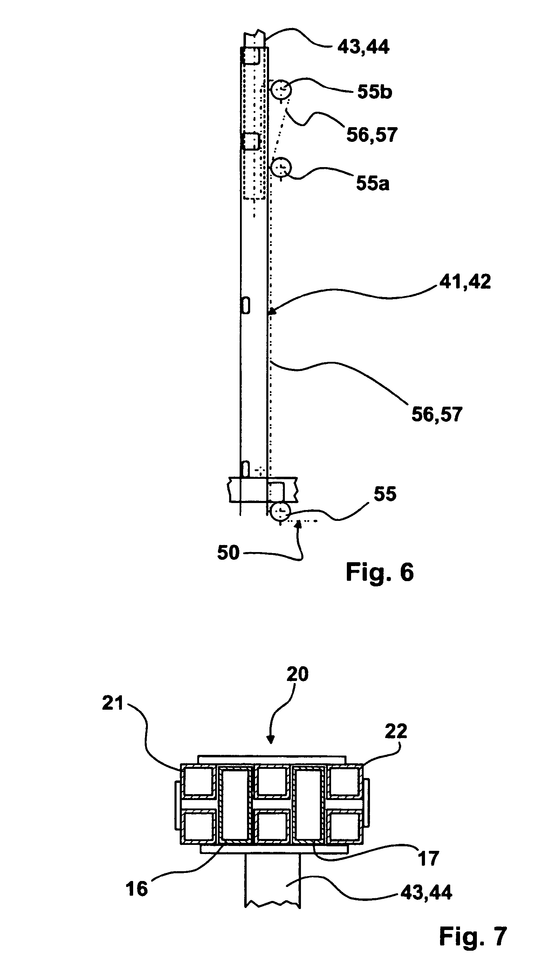

Wie bereits an anderer Stelle erläutert, wird die mit 10 bezeichnete Dachkonstruktion durch die am vorderen und hinteren Ende des Fahrgestells angeordneten Stützvorrichtungen 4 gehalten. Eine jede Stützvorrichtung 4 umfasst zwei Säulen 41, 42, wobei die Säulen 41, 42 jeweils einen Stempel 43, 44 teleskopierbar aufnehmen (Fig. 2). Die Teleskopierbarkeit der Stempel 43, 44 ergibt sich im Einzelnen aus den Darstellungen gemäß Figur 5 und Figur 6. So ist aus Figur 5 der insgesamt mit 50 bezeichnete Seilzug erkennbar, der mit einem Kolbenzylinderantrieb 51 in Verbindung steht. Der Seilzug 50 ist ein sogenannter doppelter Seilzug, da er sich im Bereich der Rollen 55 in zwei Seile 56, 57 aufspaltet, wobei ein jedes Seil 56, 57 einer Säule 41, 42 zugeordnet ist.

Der Verlauf des Seiles entlang der Säule 41, 42 ergibt sich im Einzelnen aus Figur 6. Hierbei sind an der Säule Umlenkrollen 55a und 55b angelenkt, um die herum in das Innere der Säule 41, 42 das Seil geführt wird, wobei das Seil am unteren Ende des Stempels 43, 44 befestigt ist, so dass dann, wenn der Kolbenzylinderantrieb 51 ausfährt (nicht dargestellt), die zu den einzelnen Säulen 41, 42 der beiden Stützvorrichtungen 4 geführten Seile verkürzt werden mit der Folge, dass die Stempel 43, 44 einer jeden Säule 41, 42 einer jeden Stützvorrichtung 4 ausgefahren werden, und zwar zu gleicher Zeit, so dass die Dachkonstruktion 10 gleichmäßig angehoben wird.

Gegenstand der Erfindung ist ebenfalls die Ausbildung der mit 10 bezeichneten Dachkonstruktion. Die mit 10 bezeichnete Dachkonstruktion umfasst vier bogenförmigeTraversen 11, 12, 13 und 14, wobei die Traversen 11 und 12 seitlich in Richtung der Pfeile 15 verschieblich von einer insgesamt mit 20 bezeichneten Aufnahme aufgenommen werden (Fig. 4). Die Traversen 11 und 12 werden durch die Arme 16, 17 getragen, wobei die Arme 16, 17 selbst ebenfalls teleskopierbar ausgebildet sind, wie sich dies in Anschauung von Figur 4 und Figur 5 ergibt. Die Arme 16, 17 sind - wie bereits ausgeführt - durch die Aufnahme 20 längsverschieblich in Richtung der Pfeile 15 gehalten. Die Aufnahme selbst umfasst für die verschiebliche Führung der Arme 16, 17 zwei Kammern 21, 22, an denen die beide Arme jeweils über Rollen geführt sind (Figur 7).

Das heißt, zunächst werden die Arme 16, 17 aus den kastenförmigen Profilen herausgezogen, bis diese an einen Anschlag stoßen, um alsdann auf Grund der Teleskopierbarkeit der Arme 16, 17 diese in ihre Endstellung gemäß der Figur 4 zu bringen. Da die Arme 16, 17 relativ stark auskragen, ist vorgesehen, dass die Arme im auskragenden Zustand durch Stützen 27 abgefangen werden, die auf dem Boden der Bühne im Bereich der Stützen 5 aufstehen. Nachdem die Bühne entsprechend der Darstellung gemäß Figur 4 aufgebaut worden ist, wird die Dachkonstruktion 10 mit einer entsprechenden Plane überdeckt, die auch den rückwärtigen Bereich und die Seitenteile mit erfasst

Der Vorteil der erfindungsgemäßen Bühne besteht zum einen in dem leichten und einfachen Aufbau der Bühne und zum anderen darin, dass im zusammengebauten Zustand der Bühne das Fahrgestell problemlos transportiert werden kann, ohne irgendwelche Sondergenehmigungen zu benötigen bzw. auch auf Grund des geringen Gewichtes von maximal 3,5 t keinem Sonn- oder Feiertagsfahrverbot unterworfen zu sein.

## Patentansprüche

1. Bewegliche Bühne (1), umfassend ein Fahrgestell (2) mit einer Bühnenplattform (3) und einer auf dem Fahrgestell (2) angeordneten Dachkonstruktion (10), wobei die Dachkonstruktion (10) zu beiden Seiten auf einer Stützvorrichtung (4) lagert, die in der Höhe verstellbar ist, wobei die Dachkonstruktion (10) mehrere parallel zueinander verlaufende Traversen (11-14) aufweist, wobei zumindest die äußeren Traversen (11-14) seitlich verschieblich von den Stützvorrichtungen aufnehmbar sind, wobei die Stützvorrichtung (4) jeweils zwei teleskopierbare Säulen (41, 42) umfasst, die beabstandet zueinander an dem Fahrgestell befestigt sind, wobei die Säule (41, 42) einen teleskopierbaren Stempel (43, 44) aufweist,
**dadurch gekennzeichnet,**
**dass**, die Stempel (43, 44) beider Stützvorrichtungen (4) durch einen Seilzug (50) verbunden sind, wobei der Seilzug (50) mit einem Kolbenzylinderantrieb (51) in Verbindung steht.

2. Bewegliche Bühne nach Anspruch 1,
**dadurch gekennzeichnet,**
**dass** der Seilzug (50) jeweils mit dem unteren Ende eines jeden Stempels (43, 44) in Verbindung steht, so dass bei Betätigung des Kolbenzylinderantriebes (51) alle Stempel (43, 44) gleichzeitig ausgefahren werden.

3. Bewegliche Bühne nach einem der voranstehenden Ansprüche,
**dadurch gekennzeichnet,**
**dass** die Stützvorrichtung (4) zur Aufnahme der beiden äußeren Traversen (11-14) zwei in entgegengesetzte Richtungen teleskopierbare Arme (16, 17) aufweist.

4. Bewegliche Bühne nach einem der voranstehenden Ansprüche,
**dadurch gekennzeichnet,**
**dass** die Arme (16, 17) durch eine Aufnahme längsverschieblich gehalten sind, wobei die Aufnahme (20) von der Stützvorrichtung (4) getragen wird.

5. Bewegliche Bühne nach einem der voranstehenden Ansprüche,
**dadurch gekennzeichnet,**
**dass** die Traversen (11, 14) des Daches (10) bogenförmig ausgebildet sind.

6. Bewegliche Bühne nach einem der voranstehenden Ansprüche,
**dadurch gekennzeichnet,**
**dass** der Boden (3) der Bühne (1) parallel zur Längsachse abklappbare Bodenelemente (3a, 3b) aufweist.

## Claims

1. A movable stage (1), including a chassis (2) with a stage platform (3) and with a roof construction (10) disposed on said chassis (2), said roof construction (10) being carried on either side by a height-adjustable supporting device (4), said roof construction (10) comprising several crossbeams (11 - 14) extending parallel to each other, the outer crossbeams (11 - 14) at least being receivable by the supporting devices for lateral displacement, said supporting devices (4) each including two telescoping pillars (41, 42) that are fastened to the chassis in a spaced-apart relationship, said pillar (41, 42) comprising a telescoping ram (43, 44),
**characterized in**
**that** said rams (43, 44) of said two supporting devices (4) are connected by a tackle (50), said tackle (50) communicating with a piston and cylinder drive (51).

2. The movable stage as set forth in claim 1,
**characterized in**
**that** the tackle (50) communicates with the lower end of each ram (43, 44) for all the rams (43, 44) to be extended simultaneously upon actuation of the piston and cylinder drive (51).

3. The movable stage as set forth in any one of the previous claims,
**characterized in**
**that** the supporting device (4) comprises two arms (16, 17) telescoping in opposite directions for receiving the two outer cross beams (11 - 14).

4. The movable stage as set forth in any one of the previous claims,
**characterized in**
**that** the arms (16, 17) are retained for longitudinal displacement by a receptacle, said receptacle (20) being carried by the supporting device (4).

5. The movable stage as set forth in any one of the previous claims,
**characterized in**
**that** the cross beams (11, 14) of the roof (10) are configured to be arched.

6. The movable stage as set forth in any one of the previous claims,
**characterized in**
**that** the floor (3) of the stage (1) comprises floor elements (3a, 3b) that are foldable downward parallel to the longitudinal axis.

## Revendications

1. Scène mobile (1), du type comprenant un châssis (2) avec une plate-forme de scène (3) et avec une toiture (10) disposée sur le châssis (2), la toiture (10) étant supportée des deux côtés par un dispositif de support (4) réglable en hauteur, la toiture (10) comportant plusieurs traverses (11-14) parallèles entre elles, les traverses extérieures (11-14) au moins étant aptes à être reçues mobiles en coulissement latéral par les dispositifs de support, chaque dispositif de support (4) comprenant deux colonnes télescopiques (41, 42) qui sont fixées sur le châssis avec un écartement entre elles, la colonne (41, 42) comportant une tige télescopique (43, 44),
**caractérisée en ce**
**que** les tiges (43, 44) des deux dispositifs de support (4) sont reliées par un système de câbles de commande (50), ce système de câbles de commande (50) étant relié à un ensemble cylindre-piston (51).

2. Scène mobile selon la revendication 1,
**caractérisée en ce**
**que** chaque système de câbles de commande (50) est relié à l'extrémité inférieure de chacune des tiges (43, 44) de sorte que lors de l'actionnement de l'ensemble cylindre-piston (51) toutes les tiges (43, 44) sont déployées en même temps.

3. Scène mobile selon l'une quelconque des revendications précédentes,
**caractérisée en ce**
**que** le dispositif de support (4) destiné à recevoir les deux traverses (11-14) extérieures comporte deux bras (16, 17) aptes à être télescopés dans des sens opposés.

4. Scène mobile selon l'une quelconque des revendications précédentes,
**caractérisée en ce**
**que** les bras (16, 17) sont retenus, mobiles en coulissement longitudinal, par un logement (20) qui est porté par le dispositif de support (4).

5. Scène mobile selon l'une quelconque des revendications précédentes,
**caractérisée en ce**
**que** les traverses (11, 14) du toit (10) sont de forme courbe.

6. Scène mobile selon l'une quelconque des revendications précédentes,
**caractérisée en ce**
**que** le plancher (3) de la scène (1) comporte des éléments de plancher (3a, 3b) rabattables parallèlement à l'axe longitudinal.
